(19)

**Europäisches Patentamt**
**European Patent Office**
**Office européen des brevets**

(11) **EP 4 485 383 A1**

(12) **EUROPEAN PATENT APPLICATION**

(43) Date of publication:
**01.01.2025 Bulletin 2025/01**

(51) International Patent Classification (IPC):
**G06V 10/82** (2022.01) **G06T 5/60** (2024.01)
**G06T 5/77** (2024.01) **G06T 11/60** (2006.01)
**G06T 5/70** (2024.01)

(21) Application number: **24185416.5**

(22) Date of filing: **28.06.2024**

(52) Cooperative Patent Classification (CPC):
**G06V 10/82; G06T 5/60; G06T 5/70; G06T 5/77; G06T 11/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 AU 2023204208**

(71) Applicant: **Canva Pty Ltd.**
**Surry Hills, New South Wales 2010 (AU)**

(72) Inventors:
• **TACK, Alexander**
  **New South Wales, Alexander (AU)**
• **SIETZEN, Stefan**
  **New South Wales, Stefan (AU)**

(74) Representative: **Chettle, John Edward et al**
**Venner Shipley LLP**
**200 Aldersgate**
**London EC1A 4HD (GB)**

(54) **SYSTEMS AND METHODS FOR PROMPT-BASED INPAINTING**

(57) Described embodiments generally relate to a computer-implemented method for performing prompt-based inpainting. The method comprises accessing a first image; receiving a selected area of the first image and a prompt, wherein the prompt is indicative of a visual element; determining an encoding of the prompt; generating a first visual noise based on the selected area of the first image; performing a first inpainting process on the selected area of the first image, based on the first visual noise and the encoding, to generate a second image, wherein the second image comprises a first representation of the visual element; generating, based on the first image and the second image, a third image, the third image comprising a second representation of the visual element; generating, based on the selected area and a noise strength parameter, a second visual noise; performing a second inpainting process on an area of the third image corresponding to the selected area, based on the second visual noise and the encoding, to generate a fourth image, the fourth image comprising a third representation of the visual element.

EP 4 485 383 A1

## Description

### Technical Field

Described embodiments relate to systems, methods and computer program products for performing prompt-based inpainting. In particular, described embodiments relate to systems, methods and computer program products for performing inpainting of digital images based on a prompt.

### Background

Inpainting is a term used to describe an image processing technique for removing unwanted image elements, and replacing these with new elements in a way that preserves the realism of the original image. Prompt-based inpainting describes an image processing technique for replacing image elements with new elements based on a prompt, also in a way that preserves the realism of the original image while including the new elements. Historically, inpainting was performed manually to physical images by painting or otherwise covering unwanted image elements with a physical medium. As digital image processing tools became widely adopted, digital inpainting became possible.

Digital inpainting to insert new elements into a digital image, sometimes referred to as "photoshopping", can be performed manually using digital image editing software to add new elements to an image. This can be extremely long and tedious work if a quality result is desired, especially when working with large areas. This is because this method of inpainting can require a pixel-level manipulation of the image to place the new elements into the image in a realistic way. Some automated approaches have been developed, but these often produce an unrealistic result, with the new elements appearing out of place and unnatural compared to the rest of the image.

It is desired to address or ameliorate one or more shortcomings or disadvantages associated with prior systems and methods for performing inpainting, or to at least provide a useful alternative thereto.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each of the appended claims.

### Summary

Some embodiments are directed to a method comprising: accessing a first image; receiving a selected area of the first image and a prompt, wherein the prompt is indicative of a visual element; determining an encoding of the prompt; generating a first visual noise based on the selected area of the first image; performing a first inpainting process on the selected area of the first image, based on the first visual noise and the encoding, to generate a second image, wherein the second image comprises a first representation of the visual element; generating, based on the first image and the second image, a third image, the third image comprising a second representation of the visual element; generating, based on the selected area and a noise strength parameter, a second visual noise; performing a second inpainting process on an area of the third image corresponding to the selected area, based on the second visual noise and the encoding, to generate a fourth image, the fourth image comprising a third representation of the visual element.

In some embodiments, the disclosed method further comprises the steps of: generating a final image, by inserting at least a portion of the fourth image into an area of the first image that corresponds with the user selected area; wherein the portion of the fourth image comprises the third representation of the visual element.

In some embodiments, the portion of the fourth image that is inserted into the first image is an area of the fourth image that corresponds with the user selected area.

In some embodiments, the disclosed method further comprises providing an output.

In some embodiments, the output is the fourth image and/or the final image.

In some embodiments, the output is provided by one or more of: displaying the output on a display; sending the output to another device; producing a print out of the output; and/or saving the output to a computer-readable storage medium.

In some embodiments, generating the third image comprises blending the first image with the second image.

In some embodiments, the blending of the first image with the second image is based on a blending factor.

In some embodiments, the blending of the first image with the second image is based on the equation:

*Third image = second image $\times$ blending factor + first image $\times$ (1 - blending factor)*

In some embodiments, the blending factor is a value between 0.0 to 1.0.

In some embodiments, part of the first and second inpainting processes are performed using a machine learning or artificial intelligence model that is a diffusion model.

In some embodiments, part of the first and second inpainting processes are performed by an Artificial Neural Network.

In some embodiments, part of the first and second inpainting processes are performed by a fully convolutional neural network.

In some embodiments, part of the first and second inpainting processes are performed by a U-Net.

In some embodiments, the first and second inpainting processes are performed using Stable Diffusion.

In some embodiments, the second representation of the visual element is a semi-transparent version of the first representation of the visual element.

In some embodiments, an area of the first image that corresponds with the selected area comprises pixel information, and wherein generating the first visual noise comprises adding signal noise to the pixel information.

In some embodiments, an area of the third image that corresponds with the selected area comprises pixel information, wherein the pixel information is indicative of the second representation of the visual element; and wherein generating the second visual noise comprises adding signal noise based on the noise strength parameter to the pixel information.

In some embodiments, adding signal noise based on the noise strength parameter to the pixel information of the area of the third image that corresponds with the selected area comprises increasing or decreasing the amount of signal noise based on the value of the noise strength parameter.

In some embodiments, the pixel information is a mapping of pixel information to a lower-dimensional latent space.

In some embodiments, the signal noise is Gaussian noise.

In some embodiments, the noise strength parameter is greater than 0.0 but less than 1.0.

In some embodiments, each of the images and each of the representations of the visual element comprise one or more visual attributes; and wherein at least one of the visual attributes of the third representation is more similar to the first image than the corresponding visual attribute of the first representation.

In some embodiments, the at least one attribute comprises one or more of: colour; colour model; texture; brightness; shading; dimension; bit depth; hue; saturation; and/or lightness.

In some embodiments, the prompt is one of a: text string; audio recording; or iimage file.

In some embodiments, when the prompt is a text string, determining an encoding of the prompt comprises: providing the text string to a text encoder.

In some embodiments, the text encoder is a contrastive language-image pre-training (CLIP) text encoder.

In some embodiments, the disclosed method further comprises the steps of: determining, based on the user selected area, a cropped area, wherein the user selected area is entirely comprised within the cropped area; treating the cropped area as the first image for the steps of generating the first visual noise, performing the first inpainting process and generating the third image; and inserting the fourth image into the first image at the location corresponding to the cropped area to generate an output image.

In some embodiments, the cropped area comprises a non-selected region, wherein the non-selected region is a region of the cropped area that is not within the user selected area.

In some embodiments, the disclosed method further comprises the steps of: subsequent to generating the fourth image, performing a melding process, wherein the melding process comprises; blending pixel information of the fourth image with pixel information of the first image; wherein the melding process results in the pixel information of the fourth image subsequent to the melding process being more similar to the pixel information of the first image, than the pixel information of the non-selected regions prior to the melding process.

In some embodiments, blending pixel information of the fourth image with pixel information of the first image comprises: adjusting the pixel information of the non-selected region of the fourth image so that the average pixel information value of the non-selected region of the first fourth image is equal to the average pixel information value of the non-selected region of the first image.

In some embodiments, blending pixel information of the fourth image with pixel information of the first image comprises one or more of: determining an average pixel information value of the pixel information of the non-selected region of the fourth image and subtracting the average pixel information value from the pixel information of the non-selected region of the first image; and determining a pixel information gradient of the pixel information of the non-selected region of the fourth image and altering, based on the pixel information gradient, the pixel information of the non-selected region.

Some embodiments are directed to a non-transient computer-readable storage medium storing instructions which, when executed by a processing device, cause the processing device to perform the method of any one of the present disclosures.

Some embodiments are directed to a computing device comprising: the non-transient computer-readable storage medium of the present disclosures; and a processor configured to execute the instructions stored in the non-transient computer-readable storage medium.

**Brief Description of Drawings**

Various ones of the appended drawings merely illustrate example embodiments of the present disclosure and cannot be considered as limiting its scope.

Figures 1A to 1D show a first series of example images that show the steps and results of prompt-based inpainting, according to some embodiments;
Figures 2A to 2D show a focused view of the first series of example images that show the steps and results of prompt-based inpainting, according to some embodiments;
Figures 3A to 3D show a second series of example images that show the steps and results of prompt-based inpainting, according to some embodiments;
Figure 4A is a block diagram of a system for performing prompt-based inpainting according to some embodiments;
Figure 4B is an alternate arrangement of the block diagram of Figure 4A for performing prompt-based inpainting, according to some alternative embodiments;
Figure 5 is a process flow diagram of a method of performing prompt-based inpainting, according to some embodiments;
Figures 6A to 6D are a set of example diagrams showing the steps of performing the method of Figure 5, according to some embodiments;
Figure 7 is an example diagram showing a cropping step of the method of Figure 5, according to some embodiments;
Figures 8A to 8F are example images showing visual noise that has been generated based on a visual noise parameter, according to some embodiments; and
Figures 9A to 9C are example images showing a melding process, according to some embodiments.

**Description of Embodiments**

Described embodiments relate to systems, methods and computer program products for performing prompt-based inpainting. In particular, described embodiments relate to systems, methods and computer program products for performing prompt-based inpainting of digital images.

Prompt-based image inpainting refers to inserting new elements into an area of an image, based on a prompt. Manual techniques to insert new elements into an image are time intensive and require a high degree of skill to produce a result that looks convincing. Existing prompt-based inpainting techniques can insert a new element into an image, however the new element may not look natural and/or realistic and therefore will not be convincing.

The present disclosure provides for improved prompt-based inpainting that is capable of generating and placing new image elements into an existing image that look more realistic and less out of place when compared to image elements generated by known methods of inpainting. The new image elements of the present disclosure are specifically generated to match more closely the qualities of the image they are being inserted into, and thereby blend more seamlessly, and appear less noticeable as an artificially generated element of the overall image, when compared to known inpainting techniques.

In the following description, the term "pixel information" as it relates to an image may comprise any information that is indicative of, associated with, derived/derivable from, comprised within and/or comprised of information that is indicative of the pixels that an image is comprised from. For example, pixel information may be Red, Green, Blue (RGB) values of subpixels that make up a single pixel. In some embodiments, pixel information may be a numerical representation and/or transformation of the RGB values of the subpixels; for example, a latent mapping of the RGB values of the subpixels, mapped onto a lower-dimensional latent space. Pixel information may, in some embodiments, be any other type of information or representation of information that is indicative of the RGB values of a pixel and/or subpixels.

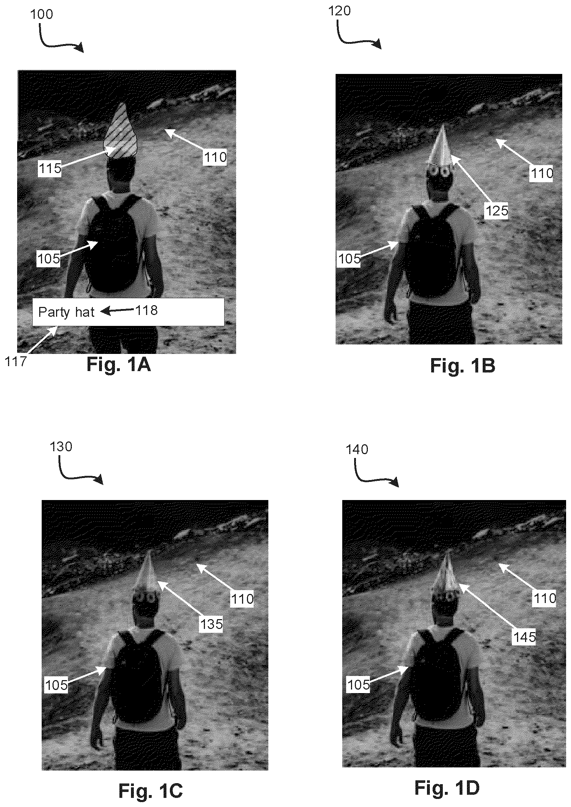

Figures 1A to 1D, 2A to 2D and 3A to 3D show examples of the unrealistic appearance of new image elements that can occur when using existing techniques for prompt-based inpainting, and how these image elements may be made more realistic in appearance in comparison to the images they are placed in using described inpainting methods.

**Figure 1A** shows an example first image 100 comprising a subject, or foreground image element 105, and a background image element 110. In the illustrated example the foreground image element 105 comprises a man, wearing a white t-shirt, black pants and a black backpack. The background image element 110 depicts a sandy/rocky path that the man is walking along. Example image 100 further comprises a user selected area 115, indicating a region of the example image 100 where the user wishes to generate a new visual element. According to some embodiments, the user wishing to edit image 100 may interact with a user interface component of a computing device displaying image 100 to indicate which area of image 100 they wish to add a new visual element to. For example, the user may use a brush tool, trace tool, or other tool to digitally select, trace, circle, or "paint" over the area where they wish to place the new visual element, to produce the user selected area 115, which can be used as a mask to perform an inpainting method. Example image 100 also comprises text entry field 117, wherein the user has entered prompt 118. The prompt 118 is for a "party hat" to be generated in the user selected area 115. In some embodiments, the text entry field 117 may appear upon selection of a particular tool as mentioned above, after designation of the user selected area 115. In some embodiments, the text entry field 117 may be a permanent component of the user interface.

**Figure 1B** shows an example second image 120 comprising the same foreground image element 105, and background image element 110 as image 100. Image 120 further comprises first visual element 125, which is not present in image 100. First visual element 125 is a computer generated party hat, placed atop the head of the man as depicted in foreground element 105. First visual element 125 has been generated in the area of image 120 that corresponds with the user selected area 115 of image 100. First visual element 125, in the example of image 120, has been generated using a prompt-based inpainting technique according to some described embodiments. For example, first visual element 125 may be generated using a diffusion machine learning (ML) model, which is a neural network model trained or otherwise configured to de-noise images containing Gaussian noise by learning to reverse the diffusion process. The prompt-based inpainting technique may, in some embodiments, be performed by/using a latent diffusion ML model, which is a diffusion ML model configured to perform the de-noising process on a mapping of the image to a lower-dimensional latent space to generate an image. The latent space represents the data in which the relationships between different data points are more easily understood and analysed. According to some embodiments, the prompt-based inpainting technique may be performed by/using a stable diffusion ML model.

In some embodiments, the prompt-based inpainting technique may be performed by a pre-trained and commercially available, open-use or open-source ML model, such as Open AI's DALL-E/DALL-E 2, Google's Imagen and/or CompVis' Stable Diffusion, for example. The visual noise used to noise the image prior to the diffusion process may be random, such as Gaussian noise, and may be generated based on the pixel information, or latent mapping of the pixel information, of the area of image 100 that corresponds with the user selected area 115. In some embodiments, when a latent diffusion ML model such as CompVis' Stable Diffusion, is being used, the Gaussian noise may be generated based on a latent mapping of the pixel information of the image. The ML model may use a prompt representation to guide the diffusion process. The prompt representation may be an encoding or an embedding of prompt 118. The prompt representation may be determined using a text encoder such as OpenAI's CLIP text encoder. The ML model may use the prompt representation to manipulate the image representation containing visual noise in a way that causes the noise to be transformed into an image corresponding to the prompt representation.

As can be seen from image 120, the first visual element 125 generated using an existing ML model appears unrealistic, such as having an unrealistic brightness, saturation and/or any other visual characteristic, or otherwise as if it is simply pasted over the top of image 120, as the colours, shading and impression of the lighting, relative to the background image element 110, do not match, and accordingly, the depiction of the party hat is unrealistic, or is not as realistic as desired.

**Figure 1C** shows an example third image 130, comprising the same foreground image element 105, and background image element 110 as images 100, 120. Image 130 further comprises second visual element 135, which is a transparent version of first visual element 125. Second visual element 135 has been generated by blending the pixel information of image 100 with the pixel information of image 120, based on a blending factor. The blending factor may be a variable by which the first or second images 100, 120 may be multiplied to determine the percentage of pixel information from each of the images 100, 120 that is combined to generate or otherwise determine image 130. For example, if the blending factor is 0.7, image 130 may be comprised of 70% of the pixel information from image 120 and 30% of the pixel information from image 100, such that the second visual element 135 is more clearly visible or otherwise more strongly expressed in the pixel information of an area of the image 130 that corresponds with the user selected area 115. If the blending factor is decreased, such as to 0.3, the second visual element 135 may be less visible or otherwise less strongly expressed in the pixel information of image 130.

**Figure 1D** shows an example fourth image 140 comprising the same foreground image element 105, and background image element 110 as images 100, 120, 130. Image 140 further comprises third visual element 145 which is a more realistic, or is otherwise a more suitable representation when compared to first visual element 125, given the content of the images 100, 120, 130, 140. In other words, third visual element 145 better matches the visual style of background image element 110 and foreground image element 105. Third visual element 145 is more realistically coloured, textured, patterned and/or shaded than the first visual element 125 in the context of background 110 and/or foreground image element 105. Third visual element 145, in the example of image 140, has been generated using the prompt-based inpainting process that was used to generate first visual element 125, but using a different visual noise input to achieve a more realistic result.

Specifically, third visual element 145 was generated using an ML model as described above, using random visual noise and a prompt representation. However, in this case, the random visual noise was generated based on the area of the third image 130 that corresponds with the user selected area 115, being the blended image generated based on first image 100 and second image 120. The prompt representation was again an encoding or an embedding of prompt 118. Furthermore, the random visual noise that was provided to the ML model to generate the third visual element 145 was determined using a noise strength parameter. Accordingly, the random visual noise that third visual element 145 was generated based on had random pixel information over a reduced range of variance, when compared to the random visual noise used to generate first visual element 125. Since third visual element 145 was generated using random visual noise based on the transparent representation of the visual element, as depicted in image 130 as second visual element 135, and the noise strength parameter, third visual element 145 appears more realistic and/or natural to the images 100, 120, 130, 140 than first visual element 125.

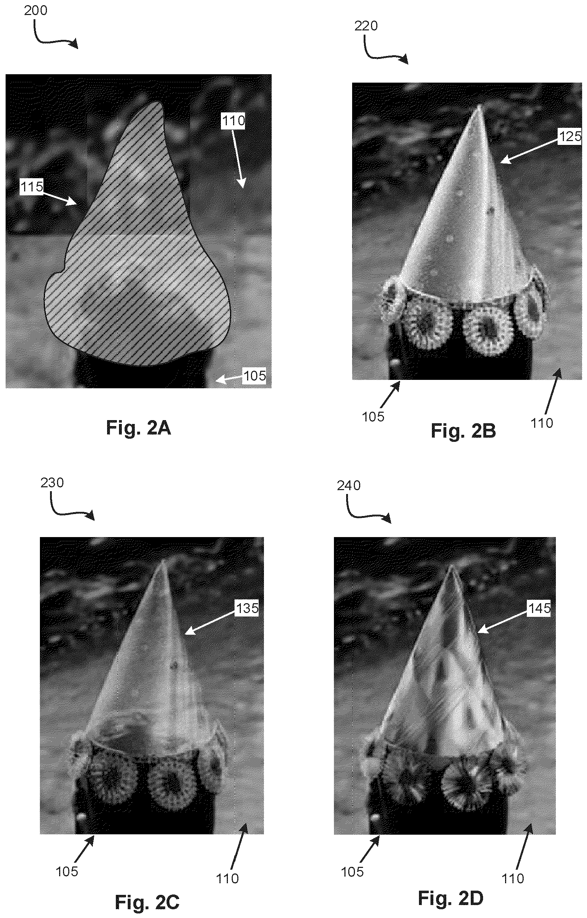

According to some embodiments, the steps described above may be performed on a cropped section of the original first image 100, which may result in a higher quality result, as described in further detail below. Where the user selected area 115 is substantially smaller than the size of original first image 100, the first image may be cropped to a smaller size, with the cropped image being larger than and including all of the user selected area 115. An example of the described method performed on a cropped image is described below with reference to Figures 2A to 2D.

**Figure 2A** shows a cropped area 200 of image 100, as described above. Cropped area 200 comprises sections of the same foreground image element 105 and background image element 110 as described above. Cropped area 200 includes all of user selected area 115.

**Figure 2B** shows a second image 220 generated based on cropped area 200, in the same manner as second image 120 is generated based on first image 100 and as described above with reference to Figures 1A and 1B. Second image 220 shows first visual element 125, generated in the same manner as described above. Image 220 comprises the same foreground image element 105 and background image element 110 as described above. First visual element 125 may be of a higher resolution than that shown in second image 120, as the total size of image 220 is lower than that of image 120. Where the resolution of the image to be processed is transformed is limited or where the resolution is modified to a predefined working resolution, this allows the relative resolution of the generated visual element 125 to be higher than if the whole image 100 were being processed, as it can be generated at a higher pixel density. However, as can be seen more clearly in image 220, first visual element 125 is brightly coloured and has a simple pattern applied to it. When compared to foreground image element 105 and background image element 110, first visual element 125 stands out, in an undesirable way, due to the high contrast and stark differences.

**Figure 2C** shows a third image 230 generated based on cropped area 200 and first image 220, in the same manner as third image 130 is generated based on first image 100 and second image 120 and as described above with reference to Figures 1A, 1B and 1C. Image 230 includes a second visual element 135, generated in the same way as described above with reference to image 130. Image 230 comprises the same foreground image element 105 and background image element 110 as described above. As can be seen more clearly in image 230, the second visual element 135 is a semi-transparent or translucent version of the first visual representation 125. Aspects of the foreground image element 105, i.e. the head of the man depicted in images 100, 120, 130, 140, and the background image element 110 are partially observable though the semi-transparent version of the first image element 125. Accordingly, the visual attributes of the first visual element appear more muted and/or subdued in second visual element 135.

**Figure 2D** shows a fourth image 240 generated based on image 230, in the same manner as fourth image 140 is generated based on third image 130 and as described above with reference to Figures 1C and 1D. Image 230 includes third visual element 145, generated in the same way as described above with reference to image 140. As described above, third visual element 145 of image 240 may be of a higher resolution than that shown in second image 140, as the total size of image 240 is lower than that of image 140.

As can be seen more clearly in image 240, third visual element 145 appears more realistic, when compared to first visual element 125, when the visual attributes of the first and second visual elements 125, 145 are compared to the visual attributes of foreground image element 105 and background image element 110. Third visual element 145 comprises colours that are more similar to those of foreground image element 105 and background image element 110. In addition, the pattern applied to the party hat of third visual element 145 is more complex and reads as a more "real" depiction of a party hat than the first visual element 125. The frills, disposed as the base of the party hat are also more complex compared to the frills of the first visual element 125, once again lending to the more realistic depiction of the party hat, according to the third visual element 145.

Fourth image 240 may be inserted into a corresponding area of original first image 100 in order to generate an output image.

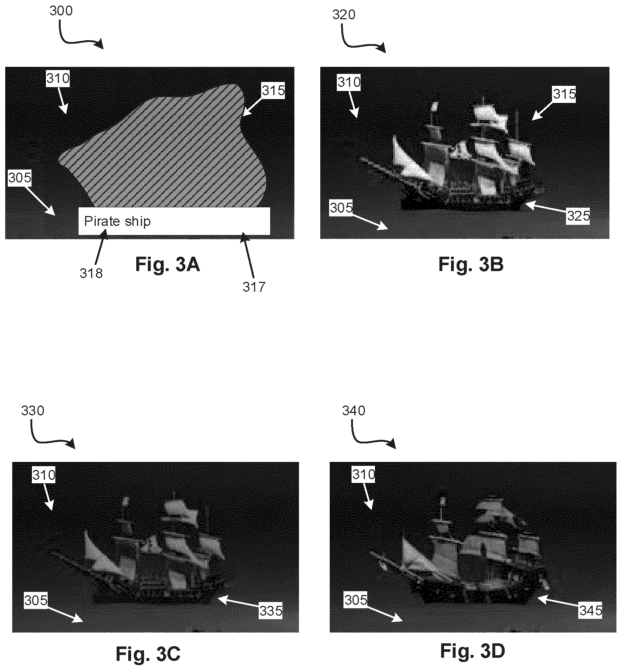

**Figure 3A** shows an example image 300 comprising a subject, or foreground image element 305, and a background image element 310. In the illustrated example, the foreground image element 305 comprises a body of water, extending from the bottom of the image 300. The background image element 310 of the image depicts the sky and extends from the top of image 300 to meet the foreground element 305. Image 300 further comprises user selected area 315, indicating a region of the example image 300 where the user wishes to generate a new visual element in the image 300. According to some embodiments, the user wishing to edit image 300 may interact with a user interface component of a computing device displaying image 300 to indicate which area of image 300 they wish to add a new visual element to. User selected area 315 can be used as a mask to perform an inpainting method. Example image 300 also comprises text entry field 317, wherein the user has entered prompt 318. The prompt 318 is for a "pirate ship" to be generated in the user selected area 315. In some embodiments, the text entry field 317 may appear upon selection of a particular tool as mentioned above, after designation of the user selected area 315, or it may be a permanent component of the user interface. As the user selected area 315 is relatively large compared to the total image size of image 300, in some embodiments no cropping is performed before processing image 300.

**Figure 3B** shows an image 320 comprising the same foreground element 305 and background image element 310 as image 300. Image 320 further comprises first visual element 325, which is not present in image 300. Visual element 325 is a pirate ship, resting on the body of water of foreground element 305. First visual element 325 has been generated in the area of image 320 that corresponds with the user selected area 315 of image 300. First visual element 325 has been generated using the prompt-based inpainting technique as described above in relation to Figures 1A to 1D, based on random visual noise generated from the pixel information or a latent mapping of the pixel information of image 300 that corresponds with the user selected area 315 and an encoding or embedding of the prompt 318.

As can be seen from image 320, the first visual element 325 appears unrealistic, and as if it is simply pasted over the top of image 320. As is depicted in image 320, the colours of the pirate ship are much brighter than may be expected from the dark scene as depicted by the foreground image element 305 and background image element 310. Accordingly, the first visual element 325 does not match the scene as depicted by the image 320.

**Figure 3C** shows an image 330, comprising the same foreground image element 305, and background image element 310 as images 300, 320. Image 130 further comprises second visual element 335, which is a transparent version of first visual element 325. Second visual element 335 has been generated by blending the pixel information of image 300 with the pixel information of image 320, based on a blending factor as described above in relation to image 130.

**Figure 3D** shows an image 340 comprising the same foreground image element 305, and background image element 310 as images 300, 320, 330. Image 340 further comprises third visual element 345 which is a more realistic, or is otherwise a more suitable representation of a pirate ship when compared to first visual element 125, given the content and overall impression of the images 300, 320, 330, 340. Third visual element 345 is more realistically coloured relative to foreground visual element 305 and background image element 310. Third visual element 345 has been generated using the prompt-based inpainting process as described in relation to Figure 1D.

Third visual element 345 was generated based on strength-controlled random visual noise based on the area of image 330 that corresponds with the user selected area 315, and the representation of prompt 318. Accordingly, third visual element 345 appears more realistic in colour when compared to foreground visual element 305 and background image element 310 of the images 300, 320, 330, 340 than first visual element 325.

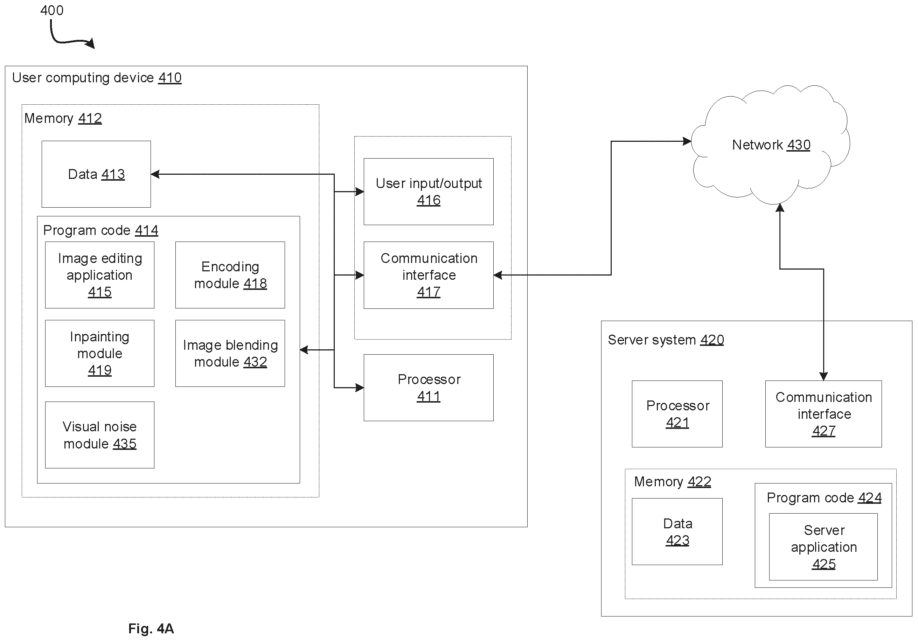

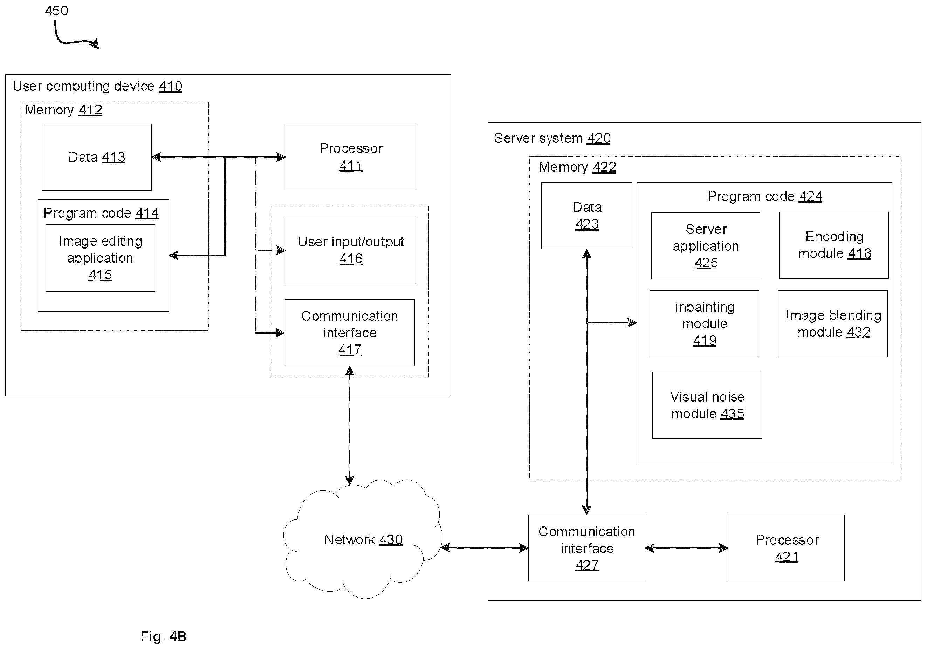

Figures 4A and 4B show different arrangements of system components, including hardware and software of systems that may be used to perform the presently disclosed methods. It would be readily understood by the person skilled in the art that the systems of Figures 4A and 4B are simply two embodiments of any number of potential embodiments that would be suitable for performing the present methods.

**Figure 4A** is a block diagram showing an example system 400 that may be used for performing prompt-based inpainting methods according to some described embodiments. The system 400 is an example of the present methods being run predominantly on a client computer. System 400 may be one such configuration of the requisite components for performing the presently disclosed method of prompt-based inpainting.

System 400 comprises a user computing device 410 which may be used by a user wishing to edit one or more images. Specifically, user computing device 410 may be used by a user to perform inpainting on one or more images using methods as described below. In the illustrated embodiment, system 400 further comprises a server system 420. User computing device 410 may be in communication with server system 420 via a network 430. However, in some embodiments, user computing device 410 may be configured to perform the described methods independently, without access to a network 430 or server system 420.

User computing device 410 may be a computing device such as a personal computer, laptop computer, desktop computer, tablet, or smart phone, for example. User computing device 410 comprises a processor 411 configured to read and execute program code. Processor 411 may include one or more data processors for executing instructions, and may include one or more of a microprocessor, microcontroller-based platform, a suitable integrated circuit, and one or more application-specific integrated circuits (ASIC's).

User computing device 410 further comprises at least one memory 412. Memory 412 may include one or more memory storage locations which may include volatile and non-volatile memory, and may be in the form of ROM, RAM, flash or other memory types. Memory 412 may also comprise system memory, such as a BIOS.

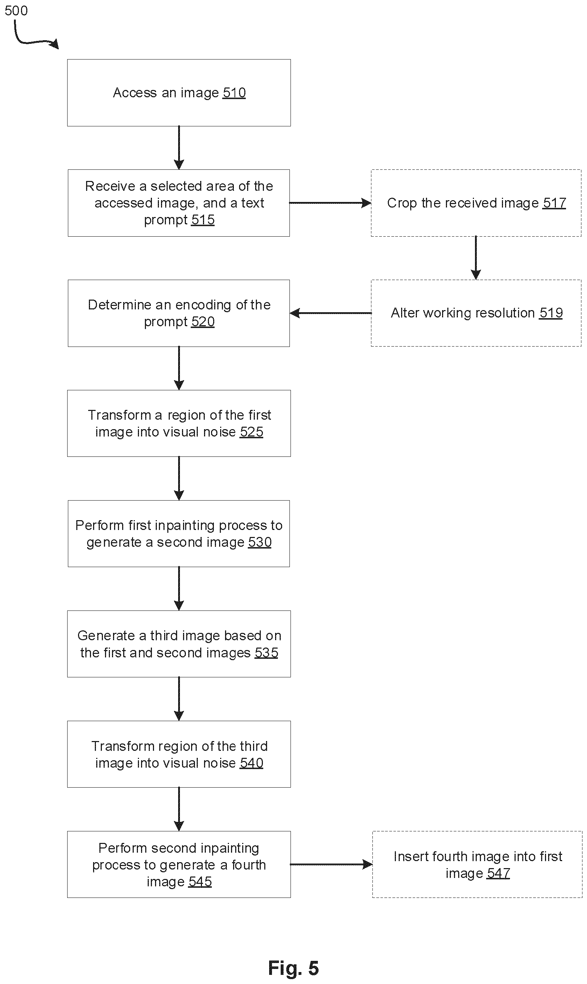

Memory 412 is arranged to be accessible to processor 411, and to store data that can be read and written to by processor 411. Memory 412 may also contain program code 414 that is executable by processor 411, to cause processor 411 to perform various functions. For example, program code 414 may include an image editing application 415. Processor 421 executing image editing application 415 may be caused to perform prompt-based inpainting methods, as described above with reference to Figures 1A to 3D and below in further detail with reference to Figures 5 to 6D.

According to some embodiments, image editing application 415 may be a web browser application (such as Chrome, Safari, Internet Explorer, Opera, or any other alternative web browser application) which may be configured to access web pages that provide image editing functionality via an appropriate uniform resource locator (URL).

Program code 414 may also comprise one or more code modules, such as one or more of an encoding module 418, an inpainting module 419, an image blending module 432 and/or a visual noise module 435. As described in further detail below, executing encoding module 418 may cause processor 411 to perform an encoding process on an input from a user, which may be a prompt, in some embodiments. According to some embodiments, processor 411 executing encoding module 418 may be caused to generate a prompt representation based on the user input. For example, this may be done by determining a lower-dimensional representation of the input that may be interpretable by a machine trained model for generating an image. Executing inpainting module 419 may cause processor 411 to perform an inpainting process. In some embodiments, processor 411 may be caused to perform an image generation inpainting process using an ML model such as Open AI's DALL-E/DALL-E 2, Google's Imagen and/or CompVis' Stable Diffusion, for example.

Executing image blending module 432 may cause the processor 411 to blend two or more images together. In some embodiments, processor 411 may be caused to blend two or more images together based on an image blending factor. The image blending factor may determine or otherwise control the proportion of each of the images that are blended together, such that the image generated from the blending processes expresses more or less of the features of a particular image based on the blending factor.

Executing visual noise module 435 may cause processor 411 to add randomly generated signal noise to pixel information or a latent mapping of the pixel information, such as the pixel information or a latent mapping of the pixel information of an area of an image that corresponds with the user selected area or a cropped area around the user selected area. The signal noise may be Gaussian noise. In some embodiments, the visual noise module 435 may be configured to add a certain level, degree or amount of visual noise to pixel information or a latent mapping of the pixel information, based on a noise strength parameter.

Encoding module 418, inpainting module 419, image blending module 432 and/or visual noise module 435 may be software modules such as add-ons or plug-ins that operate in conjunction with the image editing application 415 to expand the functionality thereof. In alternative embodiments, modules 418, 419, 432, and/or 435 may be native to the image editing application 415. In still further alternative embodiments, modules 418, 419, 432, and/or 435 may be a stand-alone applications (running on user computing device 410, server system 420, or an alternative server system (not shown)) which communicate with the image editing application 415, such as over network 430.

While modules 418, 419, 432 and 435 have been described and illustrated as being part of /installed on the user computing device 410, the functionality provided by modules 418, 419, 432, 435 could alternatively be provided by server system 420, for example as an add-on or extension to server application 425, a separate, stand-alone server application that communicates with server application 425, or a native part of server application 425. Such embodiments are described below in further detail with reference to Figure 4B.

Program code 414 may include additional applications that are not illustrated in Figure 4A, such as an operating system application, which may be a mobile operating system if user computing device 410 is a mobile device, a desktop operating system if user computing device 410 is a desktop device, or an alternative operating system.

User computing device 410 may further comprise user input and output peripherals 416. These may include one or more of a display screen, touch screen display, mouse, keyboard, speaker, microphone, and camera, for example. User I/O 416 may be used to receive data and instructions from a user, and to communicate information to a user.

User computing device 410 may further comprise a communications interface 417, to facilitate communication between user computing device 410 and other remote or external devices. Communications module 417 may allow for wired or wireless communication between user computing device 410 and external devices, and may use Wi-Fi, USB, Bluetooth, or other communications protocols. According to some embodiments, communications module 417 may facilitate communication between user computing device 410 and server system 420, for example.

Network 430 may comprise one or more local area networks or wide area networks that facilitate communication between elements of system 400. For example, according to some embodiments, network 430 may be the internet. However, network 430 may comprise at least a portion of any one or more networks having one or more nodes that transmit, receive, forward, generate, buffer, store, route, switch, process, or a combination thereof, etc. one or more messages, packets, signals, some combination thereof, or so forth. Network 430 may include, for example, one or more of: a wireless network, a wired network, an internet, an intranet, a public network, a packet-switched network, a circuit-switched network, an ad hoc network, an infrastructure network, a public-switched telephone network (PSTN), a cable network, a cellular network, a satellite network, a fibre-optic network, or some combination thereof.

Server system 420 may comprise one or more computing devices and/or server devices (not shown), such as one or more servers, databases, and/or processing devices in communication over a network, with the computing devices hosting one or more application programs, libraries, APIs or other software elements. The components of server system 420 may provide server-side functionality to one or more client applications, such as image editing application 415. The server-side functionality may include operations such as user account management, login, and content creation functions such as image editing, saving, publishing, and sharing functions. According to some embodiments, server system 420 may comprise a cloud based server system. While a single server system 420 is shown, server system 420 may comprise multiple systems of servers, databases, and/or processing devices. Server system 420 may host one or more components of a platform for performing inpainting according to some described embodiments.

Server system 420 may comprise at least one processor 421 and a memory 422. Processor 421 may include one or more data processors for executing instructions, and may include one or more of a microprocessor, microcontroller-based platform, a suitable integrated circuit, and one or more application-specific integrated circuits (ASIC's). Memory 422 may include one or more memory storage locations, and may be in the form of ROM, RAM, flash or other memory types.

Memory 422 is arranged to be accessible to processor 421, and to contain data 423 that processor 421 is configured to read and write to. Data 423 may store data such as user account data, image data, and data relating to image editing tools, such as machine learning models trained to perform image editing functions. Memory 422 further comprises program code 424 that is executable by processor 421, to cause processor 421 to execute workflows. For example, program code 424 comprises a server application 425 executable by processor 421 to cause server system 420 to perform server-side functions. According to some embodiments, such as where image editing application 415 is a web browser, server application 425 may comprise a web server such as Apache, IIS, NGINX, GWS, or an alternative web server. In some embodiments, the server application 425 may comprise an application server configured specifically to interact with image editing application 415. Server system 420 may be provided with both web server and application server modules.

Server system 420 also comprises a communications interface 427, to facilitate communication between server system 420 and other remote or external devices. Communications module 427 may allow for wired or wireless communication between server system 420 and external devices, and may use Wi-Fi, USB, Bluetooth, or other communications protocols. According to some embodiments, communications module 427 may facilitate communication between server system 420 and user computing device 410, for example.

Server system 420 may include additional functional components to those illustrated and described, such as one or more firewalls (and/or other network security components), load balancers (for managing access to the server application 425), and or other components.

**Figure 4B** is a block diagram showing an alternative example system 450 that may be used for performing prompt-based inpainting methods according to some described embodiments. The system 450 may be configured to perform all, most or some of the processes and functions that system 400 is configured to perform. System 450 may comprise all, most or some of the same componentry as that of system 400, or at least comprise equivalent componentry, such that system 450 may perform the same functions as system 400. System 450 is an example of the presently disclosed methods being run predominantly on a server side computer, wherein inputs, such as user interactions, the user prompt and/or the image that an element is to be added to may be provided and/or received at/by the user computing device 410, and then transferred to server system 420, such that the prompt-based inpainting method may be performed by the components of the server system 420.

In alternate embodiments (not shown), all functions, including receiving the prompt and image may be performed by the server system 420. Or, in some embodiments, an application programming interface (API) may be used to interface with the server system 420 for performing the presently disclosed prompt-based inpainting technique. For example, in some embodiments, the image editing application 415, encoding module 418, image blending module 432 and visual noise module 435 may reside in memory 412 of user computing device 410 and be executed by processor 411, while inpainting module 419 may reside in memory 422 of server system 420 and be accessed via an API.

**Figure 5** is a process flow diagram of a method 500 of performing prompt-based inpainting according to some embodiments. In some embodiments, method 500 may be performed at least partially by processor 411 executing image editing application 415. In some embodiments, method 500 may be performed at least partially by processor 421 executing server application 425. While certain steps of method 500 have been described as being executed by particular elements of system 400, these steps may be performed by different elements in some embodiments.

At step 510, processor 411 executing image editing application 415 accesses an image for editing. In some embodiments, the image may be a user-selected image. The accessing may be from a memory location, from a user I/O, or from an external device in some embodiments. For example, the accessing may be performed as a result of the user using a camera forming part of the user I/O 416 to capture an image for editing, or by the user selecting an image from a memory location. The memory location may be within the data 413 stored in memory 412 locally on user computing device 410, or in the data 423 in memory 422 stored remotely in server system 420. Depending on where the image editing processes are to be performed, a copy of the retrieved image may be stored to a second memory location to allow for efficient access of the image file by processor 411 and/or processor 421. According to some embodiments, the selected image may be displayed within a user interface of the image editing application 415, which may be displayed on a display screen (not shown) forming part of the user I/O 416. The image editing application 415 may display a number of editing tools for selection by a user to perform image editing functions.

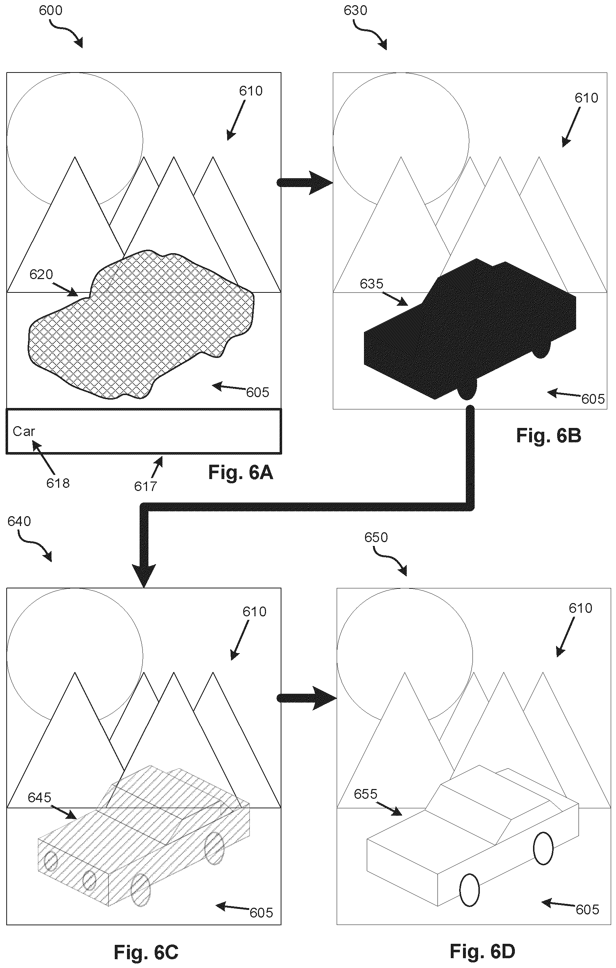

Example images that may be received at step 510 are shown in Figures 1A, 2A, and/or 3A, as described above, and in Figure 6A, as described in further detail below.

At step 515, processor 411 executing image editing application 415 receives a user input corresponding to a selection of the area of the image that they would like to insert an element into using the selected inpainting tool, referred to as the user selected area.

Further at step 515, processor 411 executing image editing application 415 receives a further user input corresponding to a prompt for the element that is to be inserted into the received image. In some embodiments, the prompt may be a text prompt, an audio recording, a selection from a list, or any other suitable type of prompt. When the prompt is a text prompt, the prompt may be entered using a text input field. The text input field may be a pop-up that appears on the user interface of the image editing application 415, which may be displayed on the display screen (not shown) forming part of the user I/O 416. The text input field may, in some embodiments, be a permanent text field as part of a menu, such as a side board or drop down menu as part of the user interface of the image editing application 415. When the prompt is an audio recording, the audio recording may be in the form of an .MP3 or .WAV, or any other suitable audio file format.

Some example images showing a user selected area and a prompt that may be received at step 515 are shown in Figures 1A, 2A and 3A, as described above, and in Figure 6A, as described in further detail below.

At optional step 517, processor 411 executing image editing application 415 may crop the accessed image to generate a first image for processing. Performing a cropping step may improve the quality of the generated visual element that is to be inserted into the image. The cropped area may be rectangular. According to some embodiments, the borders of the cropped area may be parallel to the borders of the accessed image. The cropped area may comprise the user selected area and at least one non-selected region. For example, where the cropped area is rectangular, the non-selected region may be the region or regions defined by the border of the user selected area and the border of the rectangle.

Cropping the image may improve the quality and resolution of the generated visual element, as the relative size of the visual element within the image may be increased. This is particularly true where the resolution of the image being processed is adjusted to a working resolution, as described below with reference to step 519. Where a smaller image is being processed at a set working resolution, the pixel density of the image can be increased and a larger the number of pixels can be allocated to the visual element being generated.

As a result, cropping around the user selected area may result in the generated image blending into the foreground image elements and/or background image elements more naturally, and/or result in an element that more closely resembles the rest of the image. The cropped area may be a larger area than the user selected area, such that the user selected area fits inside the cropped area.

Processor 411, executing image editing application 415 may, in some embodiments, determine a minimum cropped area that entirely encompasses the user selected area. The minimum cropped area may be the smallest rectangle that entirely encompasses the user selected area.

In some embodiments, processor 411, executing image editing application 415, may determine a buffer area around the user selected area and/or minimum cropped area to create the cropped area. Adding a buffer area may improve the quality of the generated element, as the buffer area may include additional pixel information in areas that are not covered by the minimum cropped area. Accordingly, this gives the diffusion ML model more information from which to generate new visual elements.

The buffer area may be an additional zone around the minimum cropped area. The buffer area may be determined based on the total area of the minimum cropped area and/or user selected area. For example, the buffer area may be an additional area that is between 1% and 50% of the size of the minimum cropped area and/or user selected area. The buffer area may be an additional area that is between 5% and 30% of the size of the minimum cropped area. The buffer area may be an additional area that is between 10% and 20% of the size of the minimum cropped area. The buffer area may be an additional area that is approximately 15% of the size of the minimum cropped area. The cropped image may therefore comprise the minimum cropped area around the user selected area, and an additional buffer area.

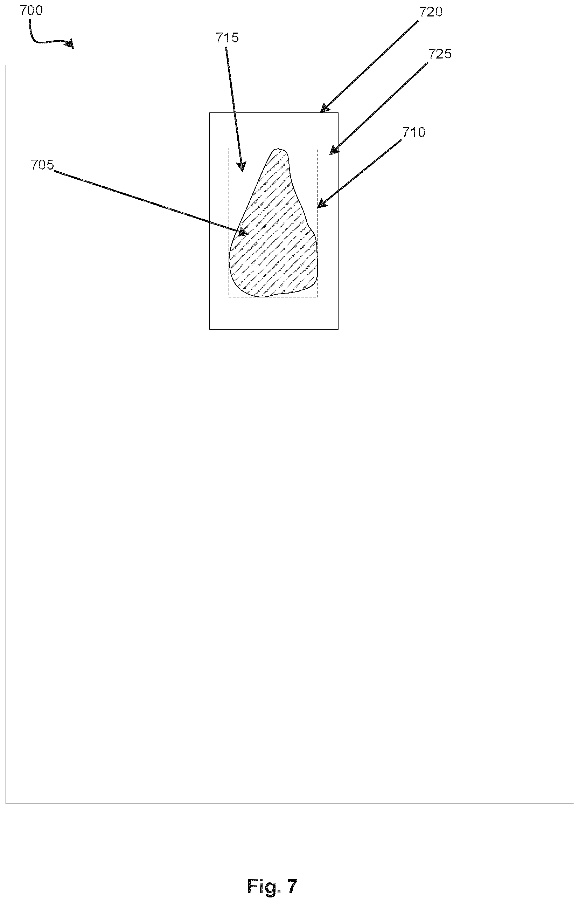

Figure 7 shows an example image cropping process performed on image 700. A user-selected area 705 is received. A minimum cropped area 710 is calculated, being the smallest rectangle that can completely hold or encompass the user-selected area 705, where the borders of the rectangle are parallel to the borders of image 700. As well as the user-selected area 705, the minimum cropped area 710 includes non-selected areas 715 between the user-selected area 705 and the border of the minimum cropped area 710.

A cropped area 720 is generated by increasing the minimum cropped area 710 by a particular amount, which may be a predetermined percentage of the size of minimum cropped area 710. This creates a buffer area 725.

The remaining steps of method 500 may be performed on the cropped area 720, where the cropped area 720 is regarded as the first image. Where step 517 is not performed and no cropping is carried out, the image accessed at step 510 is regarded as the first image.

At optional step 519, the resolution of the first image is adjusted to a working resolution. According to some embodiments, the working resolution may be between 448 x 448 pixels and 640 x 640 pixels. Where the first image is not a square, the working resolution may have the same number of pixels as a 448x448 to 640x640 square of pixels. According to some embodiments, the number of pixels in the cropped image or image to be processed may be a multiple of 32.

At step 520, processor 411 executing image editing application 415 is caused to determine an encoding of the user prompt received at step 515. Step 520 may be performed by processor 411 executing encoding module 419. The encoding may be a representation, such as a numerical representation, of the prompt. In some embodiments, when the prompt is a text prompt, the encoding module 418 may use a text encoder to determine, from the prompt, a numerical value and/or set/series of numerical values that are indicative of the meaning or content of the prompt. The encoding module 418 may use any suitable text encoder/texting encoding process, such as frequency document vectorization, one-hot encoding, index-based encoding, word embedding, or contrastive language-image pre-training (CLIP) to determine the encoding. In some embodiments encoding module may use a CLIP ViT-L/14 text encoder to determine the encoding of the prompt.

In some embodiments, when the prompt is an audio file, processor 411 executing image editing application 415 and/or encoding module 419 may be caused to determine a textual representation of the audio recording. The textual representation of the audio recording may be determined using a speech to text ML model, such as Google speech-to-Text, DeepSpeech, Kaldi, or Wav2Letter, or any other suitable speech to text ML model.

At step 525, processor 411 executing image editing application 415 is caused to generate a first visual noise based on the user selected area or cropped area as received or determined at steps 515 to 519. In some embodiments, step 525 may be performed by inpainting module 419 as part of the inpainting process of step 530. In some embodiments, step 525 may be performed by processor 411 executing visual noise module 435. The first visual noise may, in some embodiments, be an input to the inpainting module 419. The first visual noise may be generated by adding randomly generated visual noise to the area of the first image that corresponds with the user selected area received at step 515 or the cropped area determined at steps 517 or 519. For example, the pixel information or a mapping of pixel information to a lower-dimensional latent space may have Gaussian noise randomly added to it. In some embodiments, the first visual noise is generated by replacing the pixel information or the mapping of pixel information to a lower-dimensional latent space completely with visual noise, in other words, the entire set of pixel information of latent mapping of the pixel information is deleted and replaced with visual noise.

Visual noise may refer to a variance, such as a random variance, in the attributes/qualities of the pixel information or a latent mapping of the pixel information of a digital image. The attributes of the pixel information or a latent mapping of the pixel information of a digital image may be brightness, colour (e.g. colour model), dimension, bit depth, hue, chroma (saturation), and/or value (lightness). The first visual noise may be a collection of pixels/pixel information or a latent mapping of the pixel information, such as a group of pixels corresponding to the user selected area or cropped area or a latent mapping of the group of pixels corresponding to the user selected area or cropped area, that have had their information randomly altered/varied. In some embodiments, the visual noise may be Gaussian noise, which is a type of signal noise that has a probability density function equal to that of the normal distribution (also known as the Gaussian distribution). In some embodiments, the Gaussian visual noise may be white Gaussian noise, in which the values at any pair of times are identically distributed and statistically independent (and hence uncorrelated). According to some embodiments, noise may be added multiple times at a relatively low standard deviation.

At step 530, processor 411 executing image editing application 415 is caused to inpaint the area of the first image that correlates with the first visual noise area to insert a first visual element that corresponds with the received user prompt, as described in further detail below. The result is a second image that comprises, in an area of the second image corresponding with the user selected area of the first image, a new visual element that is based on the prompt. Step 530 may be performed by processor 411 executing inpainting module 419. The first visual element may be generated in an area of the first image that corresponds with the user selected area. The inpainting process may, in some embodiments, also recreate the pixel information of areas in the first image that were not included in the user selected area, such as in the buffer area. According to some embodiments, the inpainting process may replicate the non-user selected areas of the first image, such that they are substantially identical in the generated second image compared to the first image.

Some example second images with a first image element that may be generated at step 530 are shown in Figures 1B, 2B and 3B, as described above, and in Figure 6B, as described in further detail below.

At step 535, processor 411 executing image editing application 415 is caused to generate a third image, based on a blending of the first image accessed at step 510 and the second image generated at step 530. Step 535 may be performed by processor 411 executing image blending module 432. The result of step 535 may be a third image, comprising a second visual element, wherein the second visual element is a transparent representation of the first element.

Blending of the first and second images may comprise combining the image data of the first image with the image data of the second image based on a blending factor. For example, the first and second images may be blended using the following equation:

$$Third\ image = Second\ image \times A + First\ image \times (1 - A)$$

wherein A is the blending factor. The blending factor may be a number between 0.0 and 1.0, such that the third image represents relative proportions of the pixel information of each image based on the blending factor. For example, the blending factor may be 0.5, such that the third image is indicative of a 50% blend of both the first and the second image. In some embodiments the blending factor may be a fixed number. The blending factor may be a predetermined number that is based on one or more image attributes or visual attributes, such as the spectrum of colours in the image, the spectrum of colours in the user selected area, the colours of the visual element, the difference/similarity between the colours of the visual element and the colours of the image in the user selected area, or any other relevant attribute. In some embodiments, the user may be able to enter their own blending factor to control the appearance of the visual element.

Some example third images created by blending a first image and a second image that may be generated at step 535 are shown in Figures 1C, 2C and 3C, as described above, and in Figure 6C, as described in further detail below.

At step 540, processor 411 executing image editing application 415 is caused to generate a second visual noise based on an area of the third image that corresponds with the user selected area, as received or determined at step 515, or the cropped area determined at steps 517 or 519, and a predetermined noise strength parameter. In some embodiments, step 540 may be performed by inpainting module 419 as part of the inpainting process of step 545. In some embodiments, step 540 may be performed by processor 411 executing visual noise module 435. The second visual noise may be an input to inpainting module 419. In some embodiments, the second visual noise may be generated by adding visual noise based on the noise strength parameter to the area of the third image as generated at step 535 that corresponds with the user selected area as received at step 515, or the cropped area determined at steps 517 or 519. For example, the pixel information or a mapping of pixel information to a lower-dimensional latent space that corresponds with the user selected area or cropped area may have Gaussian noise randomly added to it, however the standard deviation of the Gaussian noise may be smaller than the standard deviation of the Gaussian noise added at step 525, based on the value of the noise strength parameter. According to some embodiments, noise may be added multiple times at a relatively low standard deviation.

The noise strength parameter may be a value less than 1.0, that controls the amount of noise that is added to the area of the third image corresponding to the user selected area, to determine the second visual noise. Values of the noise strength parameter that approach 1.0 allow for a high degree of variance in the appearance of the third visual element, as generated at step 545, but will also produce a third visual element that may not be as similar to the second visual element, and accordingly may not look as natural or realistic compared to the rest of the fourth image. In some embodiments, the noise strength parameter may be a predetermined number, for example the noise strength parameter may be 0.6. In some embodiments, the adding of the visual noise to the user selected area or cropped area is handled by a Pseudo numerical methods for diffusion models (PNDM) scheduler.

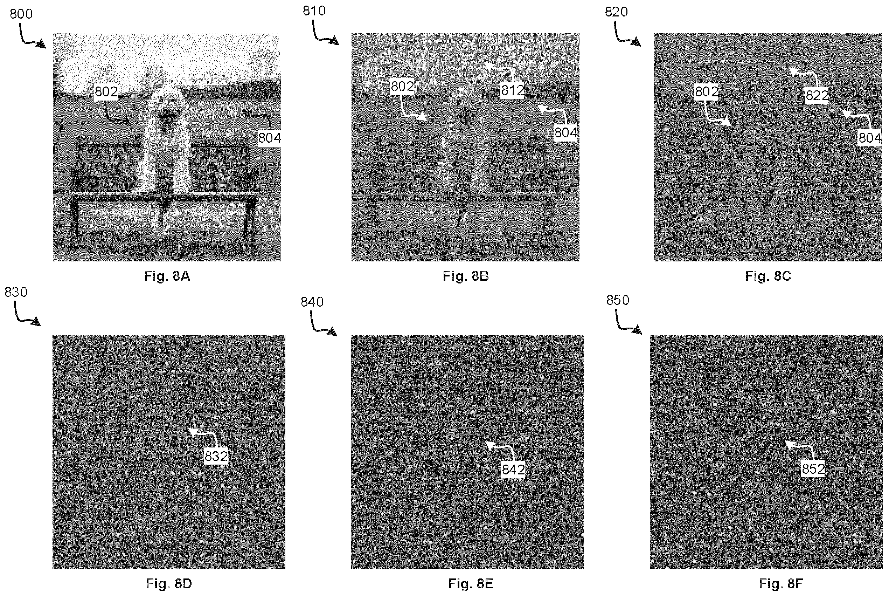

Figures 8A to 8F show examples of visual noise added to an image based on various noise strength parameters. As can be seen from Figures 8A to 8F and the below description, as the noise strength parameter is increased, more visual noise is added to the figure, accordingly obscuring more and more of the original image content.

**Figure 8A** is an example image 800 that has had visual noise added to it based on a noise strength parameter of 0.0. The image 800 comprises foreground image element 802 and background image element 804. The foreground image element 802 depicts a shaggy dog sitting on a wooden bench. The background image element 804 depicts a grassy field with bare trees and a small mountain in the far distance. As the noise strength parameter is 0.0, there is no visual noise added to the image and the foreground and background image elements 802, 804 can be easily discerned.

**Figure 8B** is an example image 810 that has had visual noise 812 added to it based on a noise strength parameter of 0.2. Image 810 comprises the same foreground image element 802 and background image element 804 of image 800. However, due to the visual noise 812 that has been added to image 810, the foreground image element 802 and background image element 804 is slightly obscured, but still discernible.

**Figure 8C** is an example image 820 that has had visual noise 822 added to it based on a noise strength parameter of 0.4. Image 820 comprises the same foreground image element 802 and background image element 804 of image 800. The visual noise 822 added to image 820 has almost completely obscured foreground image element 802 and background image element 804, as they are barely discernible over the added visual noise 822.

**Figure 8D** is an example image 830 that has had visual noise 832 added to it based on a noise strength parameter of 0.6. Image 830 notionally comprises the same foreground image element 802 and background image element 804 of image 800, however due to the amount of visual noise 832 added to the image 830, the foreground image element 802 and background image element 804 or no longer visible over the added visual noise 832.

**Figure 8E** is an example image 840 that has had visual noise 842 added to it based on a noise strength parameter of 0.8. Image 840 notionally comprises the same foreground image element 802 and background image element 804 of image 800, however due to the amount of visual noise 842 added to the image 840, the foreground image element 802 and background image element 804 or no longer visible over the added visual noise 842.

**Figure 8F** is an example image 850 that has had visual noise 852 added to it based on a noise strength parameter of 1.0. Image 840 notionally comprises the same foreground image element 802 and background image element 804 of image 800, however due to the amount of visual noise 852 added to the image 850, the foreground image element 802 and background image element 804 have been completely replaced by visual noise 852.

At step 545, the processor 411 executing image editing application 415 is caused to inpaint the area of the third image that correlates with the second visual noise area to generate a fourth image comprising a third visual element. Step 545 may be performed by processor 411 executing inpainting module 419. The third visual element may be generated in an area of the third image that corresponds with the user selected area. The inpainting process may, in some embodiments, also recreate the pixel information of areas in the third image that were not included in the user selected area. The areas of the third and fourth images corresponding to the non-user selected area may therefore be substantially identical.

According to some embodiments, where the first image was adjusted to a working resolution smaller than the original resolution of the first image, the resolution of the fourth image may be increased appropriately to be the same as the original resolution.

At optional step 547, where the image accessed at step 510 was cropped, processor 411, executing image editing application 415, may then insert at least a portion of the fourth image into the area of the first image that corresponds with the cropped area, to create an output image. In some embodiments, only the area of the fourth image that corresponds with the user selected area may be inserted back into the first image. In other embodiments, the whole fourth image may be inserted back into the first image.

In some embodiments, at step 547, processor 411 executing image editing application 415 may be caused to meld the pixel information of the fourth image with the first image, such that the fourth image blends naturally, and/or substantially unnoticeably with and/or into the first image.

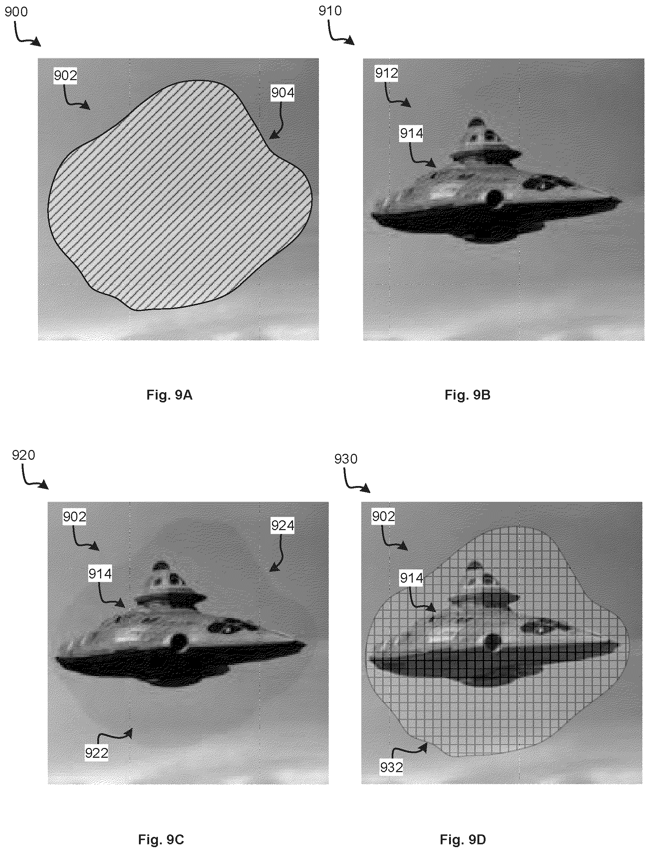

Figure 9A, 9B and 9C are example images depicting the melding of the pixel information of the fourth image with the first image. As can be seen from Figures 9A to 9C and the description below, the pixel information of the cropped area may be altered such that the pixel information of the cropped area is more similar and/or substantially identical to the pixel information of the first image.

**Figure 9A** is an example image 900 comprising non-user selected pixels 902, and user selected pixels 904. User selected pixels 904 may be an area selected by the user where a new visual element is to be generated or otherwise placed. During the melding process the processor 411, executing the image editing application 415, may determine an average value of the pixel information of non-user selected pixels 902. For example, the average pixel values of the non-user selected pixels 902 may be RGB values (0.7, 0.4, 0.5).

**Figure 9B** is an example image 910 that has been generated by a diffusion process, by a diffusion based ML model, according to the described embodiments. Image 910 comprises non-user selected pixels 912 which may comprise pixel information that is different to the pixel information of non-user selected pixels 902. Image 910 may also comprise new visual element 914, generated according to the presently described methods. During the melding process, the processor 411, executing the image editing application 415, may determine an average value of the pixel information of non-user selected pixels 912. For example, the average value of the pixel information of the non-user selected pixels 912 may be RGB values (0.68, 0.38, 0.49).

**Figure 9C** is an example of the image 900 of Figure 9A further comprising inserted area 924. The inserted area 924 comprising visual element 914 and non-matching area 922. Non-matching area 922 is an area that surrounds the visual element 914 that clearly does not match in colour to the rest of image 920. Inserted area 924 may be clipped from image 910, based on the area of user selected pixels 904 and inserted into image 900 to generate image 920. Image 920 may be a focused view of a larger image, such as the first image or accessed image, wherein the element is desired to be inserted.

**Figure 9D** is an example image 930, comprising visual element 914 and non-user selected pixels 902. Notably, image 930 does not comprise non-matching area 922, rather, image 930 comprises adjusted pixels 932 that match non-user selected pixels 902. In some embodiments, the non-matching area 922 is caused to be removed or in other words, adjusted pixels 932 are caused to be generated or adjusted, by determining the difference between the average value of the pixel information of the non-user selected pixels 902 and the average value of the pixel information of the non-user selected pixels 912, and then correcting the pixel information of the user selected pixels 924 by the determined difference. For example, when the average value of the pixel information of the non-user selected pixels 902 are RGB values (0.7, 0.4, 0.5) and the average value of the pixel information of the non-user selected pixels 912 are RGB values (0.68, 0.38, 0.49), the difference between the two is calculated to be (0.2, 0.2, 0.01). The difference is than added to the pixel values of the user selected pixels 924 to correct the pixel information, thereby removing non-matching area 922 or otherwise generating, creating or adjusting adjusted pixels 932. In some embodiments, the difference may be added to the pixel values of all of image 912 before a section of image 912 is inserted into image 900.

The melding processing, in some embodiments, may comprise determining one or more average pixel information values and equalising average pixel values of the fourth image to match those of the first image. For example, the average pixel value of the non-user selected area of the image may be determined. The one or more average pixel information values may be used to correct, or otherwise adjust pixel information values of the fourth image, so as to harmonise the colour between the first and fourth images.

In some embodiments, adjusting the pixel information may comprise determining a difference between the average pixel information vales of the non-user selected area of the first image and the average pixel information vales of the non-user selected area of the fourth image, and adjusting the pixel information values of the non-user selected area of the fourth image based on the determined difference.

In some embodiments, the melding processing may comprise determining one or more average pixel information values, derived from one or more of the buffer area, the cropped area, and/or one or more areas that are proximal to the buffer area and/or cropped area. The one or more average pixel information values may be used to correct, or otherwise adjust pixel information values of the buffer area and/or recreated pixel information, so as to reduce the appearance of any unnatural image features, such as straight lines denoted by noticeable colour differences between the newly inserted recreated pixel information associated with the fourth visual element and the pixel information of the fourth image.

In some embodiments, adjusting the pixel information may comprise determining a difference between the average pixel information vales of the one or more areas that are proximal to the buffer zone and/or the areas corresponding with the recreated pixel information, and the buffer area, and adjusting the pixel information values of the buffer area and/or areas that correspond with the recreated pixel information, based on the determined difference. In some embodiments, a change of colour, or otherwise a colour gradient may be determined, based on the one or more areas that are proximal to the buffer area and/or cropped area. The recreated pixel information may then be adjusted based on the determined colour gradient. This may have the benefit of recreating any shadows, or impressions of light sources present in the fourth image.

In some embodiments, the user-selected area may be feathered outwardly from the boundary of the user selected area, such that the fourth image blends into the first image better. When the user-selected area is feathered outwards, the pixel information that has been generated, such as in the non-selected region and/or the generated visual element may have a slight influence over the visual characteristics of the first image.

The inpainting process of steps 530 and 545, as performed by the processor 411 executing image editing application 415 and/or inpainting module 419 may use one or more machine learning (ML) models to generate the visual elements. The ML model may be an AI or ML model that incorporates deep learning based computation structures, such as artificial neural networks (ANNs). The ANN may be an autoencoder in some embodiments. The ML models may be one or more pre-trained models such as Open AI's DALL-E/DALL-E 2, Google's Imagen and/or CompVis' Stable Diffusion, for example.

In some embodiments, the ML models may use a process of diffusion or latent diffusion to generate the visual elements. Diffusion models function by destroying training data through the successive addition of Gaussian noise, and then learning to recover the data by reversing this noising process.

In some embodiments, the inpainting or otherwise image generation process performed when inpainting module 419 is caused to be executed by processor 411 may comprise receiving as inputs and/or generating by the ML model, a representation of the user prompt (as received at step 515) and an initial visual noise (as generated at step 525 and/or 540), and providing the inputs to a U-net.

The U-net is a fully convolutional neural network and consists of a contracting path and an expansive path. The contracting path is a typical convolutional network that consists of repeated application of convolutions, each followed by a rectified linear unit (ReLU) and a max pooling operation. During the contraction, the spatial information is reduced while feature information is increased. The expansive pathway combines the feature and spatial information through a sequence of up-convolutions and concatenations with high-resolution features from the contracting path. In other words, an image is converted into a vector, but is then converted back from that vector into an image.

The inpainting process may comprise inferring, by the U-net from the visual noise, a first estimate of an image to be generated, based on the initial visual noise and the representation of the prompt. The first estimate may then be subtracted from the initial visual noise to generate a subsequent visual noise, which will then be fed back into the U-net, along with the representation of the prompt, to generate a second estimate of the image to be generated. This process may be repeated iteratively until a termination criteria is met, such as a decrementing time step counter reaching zero, or a predetermined amount of time elapsing, for example.

In some embodiments, the inpainting process may use a technique referred to as "classifier free guidance" to improve the image generation results of the ML model. Classifier free guidance may comprise running two instances of the image generation process described above, in parallel. However, one instance of the image generating process may use the representation of the prompt, and the other may not. When a classifier free guidance process is being used, the estimate of the image that was determined using the prompt, may be compared to the estimate of the image that was determined without using the prompt. The difference between the two estimates may then be emphasised, strengthened or otherwise amplified, such that when the amplified estimate of the image is subtracted from the visual noise, the ML model is pushed towards further towards an inference that is indicative of the representation of the prompt.

In some embodiments, the inpainting process may use a latent diffusion image generation technique. Wherein, prior to the adding of visual noise and generation of the visual element, the pixel information of the area of the image that corresponds with the user selected area may be mapped or transformed into a latent mapping or representation of the pixel information in a latent space. Gaussian visual noise may then be added to the latent mapping, and the image generation process may then be performed on the latent mapping plus noise. Subsequent to the completion of the image generation process, the latent mapping is decoded back into an image, such that the visual element may be placed back into the image, in the user selected area. By transforming the pixel information into a latent space, the underlying structure of the pixel information, as captured by the mapping, may be more easily understood and analysed by the ML model. The latent mapping of the pixel information is used to map the pixel information to the space of the encoding of the user prompt, such that the image generation process may be guided by the prompt representation, such as the encoding, of the user prompt.

Figures 6A to 6D are diagrammatical representations of the stages of performing method 500 on an image.

**Figure 6A** shows an example image 600, which may be an image received by processor 411 executing image editing application 415 at step 510 of method 500, as described above. Image 600 includes a foreground element 605 appearing closest to the viewer, and a background element 610. Image 600 further comprises user selected area 620 where the user wants to place a new visual element. The user selected area 620 was designated by the user at step 515. Image 600 may comprise input field 617, wherein the user may enter prompt 618 at step 515. Prompt 618 indicates that the user wishes to generate or otherwise place an image element of a car in the foreground of image 600.

**Figure 6B** shows an example image 630, comprising the same foreground element 605 and background 610 as image 600, which may be an image displayed to a user via user I/O 416 after execution of step 530 of method 500, as described above. Image 630 comprises first visual element 635, generated when inpainting module 419 is executed by processor 411. First visual element 635, as depicted in image 630 is a car. However, the car as depicted by first visual element 635 may not match the foreground element 605 and/or background 610, or in other words first visual element 635 may have a colour, texture, brightness, shading or any other visual appearance that is not substantially similar to that of the foreground element 605 and/or background 610 or image 630 overall. In particular, first visual element 635 is depicted as a solid black car, which contrasts sharply with foreground element 605 and background 610, giving the appearance that the car has simply been inserted into the image 630 and was not originally part of the image.

**Figure 6C** shows an example image 640, comprising the same foreground element 605 and background 610 as images 600, 630, which may be an image displayed to a user via user I/O 416 after execution of step 535 of method 500, as described above. Image 640 may comprise second visual element 645, generated at step 535 of method 500. Second visual element 645 may be a transparent representation of first visual element 635. Second visual element 645 is depicted with a diagonal line pattern, indicating that it is partially visible. Further, elements of the background 610 can also be seen through the second visual element 645.

**Figure 6D** shows an example image 650, comprising the same foreground element 605 and background 610 as images 600, 630, 640, which may be an image displayed to a user via user I/O 416 after execution of step 545. Image 650 may also comprise third visual element 655, generated at step 545 of method 500. Third visual element 655, as indicated by image 650, and in comparison to first visual element 635 may look more realistic, or otherwise look similar to the rest of image 650. In other words, third visual representation may have a colour, texture, brightness, shading or any other visual appearance that is comparatively more similar to the foreground element 605 and/or background 610 when compared to that of first visual element 635. As can be seen in image 650, third visual element 655 is depicted as similar colour and shading to the foreground element 605 and the background 610, and thus appears more realistic and as if the car was part of the original image 600.

In some embodiments, the user may not be presented with image 630 or image 640. Instead, the user may only be presented with image 600, upon which they can designate user selected area 620 and provide prompt 618. Subsequent to step 515 of receiving the user selected area 620 and the prompt 618, processor 411 may perform steps 520 to 545 to generate image 650. Image 650 may then, be presented to the user via user I/O 416.

It will be appreciated by persons skilled in the art that numerous variations and/or modifications may be made to the above-described embodiments, without departing from the broad general scope of the present disclosure. The present embodiments are, therefore, to be considered in all respects as illustrative and not restrictive.

The specification includes the following subject-matter expressed in the form of clauses 1-34.

1. A method comprising:

accessing a first image;

receiving a selected area of the first image and a prompt, wherein the prompt is indicative of a visual element;

determining an encoding of the prompt;

generating a first visual noise based on the selected area of the first image;

performing a first inpainting process on the selected area of the first image, based on the first visual noise and the encoding, to generate a second image, wherein the second image comprises a first representation of the visual element;

generating, based on the first image and the second image, a third image, the third image comprising a second representation of the visual element;

generating, based on the selected area and a noise strength parameter, a second visual noise;

performing a second inpainting process on an area of the third image corresponding to the selected area, based on the second visual noise and the encoding, to generate a fourth image, the fourth image comprising a third representation of the visual element.

2. The method of clause 1, further comprising:

generating a final image, by inserting at least a portion of the fourth image into an area of the first image that corresponds with the user selected area;

wherein the portion of the fourth image comprises the third representation of the visual element.

3. The method of clause 2, wherein the portion of the fourth image that is inserted into the first image is an area of the fourth image that corresponds with the user selected area.

4. The method of any one of clauses 1 to 3, further comprising providing an output.

5. The method of clause 4, wherein the output is the fourth image and/or the final image.

6. The method of clause 4 or clause 5, wherein the output is provided by one or more of:

displaying the output on a display;

sending the output to another device;

producing a print out of the output; and/or

saving the output to a computer-readable storage medium.

7. The method of any of clauses 1 to 6, wherein generating the third image comprises blending the first image with the second image.

8. The method of clause 7, wherein the blending of the first image with the second image is based on a blending factor.

9. The method of clause 8, wherein the blending of the first image with the second image is based on the equation:

*Third image = second image $\times$ blending factor + first image $\times$ (1 - blending factor)*

10. The method of clause 8 or clause 9, wherein the blending factor is a value between 0.0 to 1.0.

11. The method of any of clauses 1 to 10, wherein part of the first and second inpainting processes are performed using a machine learning or artificial intelligence model that is a diffusion model.

12. The method of clause 11, wherein part of the first and second inpainting processes are performed by an Artificial Neural Network.

13. The method of clause 11 or clause 12, wherein part of the first and second inpainting processes are performed by a fully convolutional neural network.

14. The method of any one of clauses 11 to 13, wherein part of the first and second inpainting processes are performed by a U-Net.

15. The method of any one of clauses 11 to 14, wherein the first and second inpainting processes are performed using Stable Diffusion.

16. The method of any of clauses 1 to 15, wherein the second representation of the visual element is a semi-transparent version of the first representation of the visual element.

17. The method of any of clauses 1 to 16, wherein an area of the first image that corresponds with the selected area comprises pixel information, and wherein generating the first visual noise comprises adding signal noise to the pixel information.

18. The method of any of clauses 1 to 17, wherein an area of the third image that corresponds with the selected area comprises pixel information,

wherein the pixel information is indicative of the second representation of the visual element; and
wherein generating the second visual noise comprises adding signal noise based on the noise strength parameter to the pixel information.

19. The method of clause 18, wherein adding signal noise based on the noise strength parameter to the pixel information of the area of the third image that corresponds with the selected area comprises increasing or decreasing the amount of signal noise based on the value of the noise strength parameter.

20. The method of any one of clauses 17 to 19 wherein the pixel information is a mapping of pixel information to a lower-dimensional latent space.

21. The method of any one of clauses 17 to 20, wherein the signal noise is Gaussian noise.

22. The method of any of clauses 1 to 21, wherein the noise strength parameter is greater than 0.0 but less than 1.0.

23. The method of any of clauses 1 to 22, wherein each of the images and each of the representations of the visual element comprise one or more visual attributes; and
wherein at least one of the visual attributes of the third representation is more similar to the first image than the corresponding visual attribute of the first representation.

24. The method of clause 23, wherein the at least one attribute comprises one or more of:

colour;
colour model;
texture;
brightness;
shading;
dimension;
bit depth;
hue;
saturation; and/or
lightness.

25. The method of any of clauses 1 to 24, wherein the prompt is one of a:

text string;
audio recording; or
image file.

26. The method of clause 25, wherein when the prompt is a text string, determining an encoding of the prompt comprises:
providing the text string to a text encoder.

27. The method of clause 26, wherein the text encoder is a contrastive language-image pre-training (CLIP) text encoder.

28. The method of any of clauses 1 to 27, further comprising the step of:

determining, based on the user selected area, a cropped area, wherein the user selected area is entirely comprised within the cropped area;
treating the cropped area as the first image for the steps of generating the first visual noise, performing the first inpainting process and generating the third image; and
inserting the fourth image into the first image at the location corresponding to the cropped area to generate an output image.

29. The method of clause 28, wherein the cropped area comprises a non-selected region, wherein the non-selected region is a region of the cropped area that is not within the user selected area.

30. The method of clause 29, further comprising:
subsequent to generating the fourth image, performing a melding process,
wherein the melding process comprises;

blending pixel information of the fourth image with pixel information of the first image;
wherein the melding process results in the pixel information of the fourth image subsequent to the melding process being more similar to the pixel information of the first image, than the pixel information of the non-selected regions prior to the melding process.

31. The method of clause 30, wherein blending pixel information of the fourth image with pixel information of the first image comprises:
adjusting the pixel information of the non-selected region of the fourth image so that the average pixel information value of the non-selected region of the fourth image is equal to the average pixel information value of the non-selected region of the first image.

32. The method of clause 30, wherein blending pixel information of the fourth image with pixel information of the first image comprises one or more of:

determining an average pixel information value of the pixel information of the non-selected region of the fourth image and subtracting the average pixel information value from the pixel information of the non-selected region of the first image; and
determining a pixel information gradient of the pixel information of the non-selected region of the fourth image and altering, based on the pixel information gradient, the pixel information of the non-selected region.

33. A non-transient computer-readable storage medium storing instructions which, when executed by a processing device, cause the processing device to perform the method of any one of clauses 1 to 32.

34. A computing device comprising:

the non-transient computer-readable storage medium of clause 33; and
a processor configured to execute the instructions stored in the non-transient computer-readable storage medium.

**Claims**

1. A method comprising:

accessing a first image;
receiving a selected area of the first image and a prompt, wherein the prompt is indicative of a visual element;
determining an encoding of the prompt;
generating a first visual noise based on the selected area of the first image;
performing a first inpainting process on the selected area of the first image, based on the first visual noise and the encoding, to generate a second image, wherein the second image comprises a first representation of the visual element;
generating, based on the first image and the second image, a third image, the third image comprising a second representation of the visual element;

generating, based on the selected area and a noise strength parameter, a second visual noise; and

performing a second inpainting process on an area of the third image corresponding to the selected area, based on the second visual noise and the encoding, to generate a fourth image, the fourth image comprising a third representation of the visual element.

2. The method of claim 1, further comprising:

generating a final image, by inserting at least a portion of the fourth image into an area of the first image that corresponds with the user selected area;

wherein the portion of the fourth image comprises the third representation of the visual element, and optionally wherein the portion of the fourth image that is inserted into the first image is an area of the fourth image that corresponds with the user selected area.

3. The method of claim 1 or claim 2, further comprising providing an output, wherein the output is the fourth image and/or the final image.

4. The method of claim 3, wherein the output is provided by one or more of:

displaying the output on a display;

sending the output to another device;

producing a print out of the output; and/or

saving the output to a computer-readable storage medium.

5. The method of any of the preceding claims wherein generating the third image comprises blending the first image with the second image based on a blending factor, wherein the blending of the first image with the second image is based on the equation:

*Third image = second image $\times$ blending factor + first image $\times$ (1 - blending factor)*

wherein the blending factor is a value between 0.0 to 1.0.

6. The method of any of the preceding claims, wherein part of the first and second inpainting processes are performed by:

using a machine learning or artificial intelligence model that is a diffusion model, and/or

an Artificial Neural Network, and/or

a fully convolutional neural network, and/or

a U-Net, and/or

using Stable Diffusion.

7. The method of any of the preceding claims, wherein the second representation of the visual element is a semi-transparent version of the first representation of the visual element.

8. The method of any of the preceding claims,

wherein an area of the first image that corresponds with the selected area comprises pixel information, and wherein generating the first visual noise comprises adding signal noise to the pixel information, and/or

wherein an area of the third image that corresponds with the selected area comprises pixel information, wherein the pixel information is indicative of the second representation of the visual element; and

wherein generating the second visual noise comprises adding signal noise based on the noise strength parameter to the pixel information;

optionally wherein adding signal noise based on the noise strength parameter to the pixel information of the area of the third image that corresponds with the selected area comprises increasing or decreasing the amount of signal noise based on the value of the noise strength parameter, and

further optionally wherein the pixel information is a mapping of pixel information to a lower-dimensional latent space.

9. The method of any of the preceding claims, wherein each of the images and each of the representations of the visual element comprise one or more visual attributes; and
wherein at least one of the visual attributes of the third representation is more similar to the first image than the corresponding visual attribute of the first representation.

10. The method of claim 9, wherein the at least one attribute comprises one or more of:

colour;
colour model;
texture;
brightness;
shading;
dimension;
bit depth;
hue;
saturation; and/or
lightness.

11. The method of any of the preceding claims, wherein the prompt is one of a:

text string;
audio recording; or
image file,
wherein when the prompt is a text string, determining an encoding of the prompt comprises:
providing the text string to a text encoder, and, optionally wherein the text encoder is a contrastive language-image pre-training (CLIP) text encoder.

12. The method of any of the preceding claims, further comprising the steps of:

determining, based on the user selected area, a cropped area, wherein the user selected area is entirely comprised within the cropped area;
treating the cropped area as the first image for the steps of generating the first visual noise, performing the first inpainting process and generating the third image; and
inserting the fourth image into the first image at the location corresponding to the cropped area to generate an output image.

13. The method of claim 12, wherein the cropped area comprises a non-selected region, wherein the non-selected region is a region of the cropped area that is not within the user selected area, and wherein the method optionally further comprises:
subsequent to generating the fourth image, performing a melding process,
wherein the melding process comprises;

blending pixel information of the fourth image with pixel information of the first image;
wherein the melding process results in the pixel information of the fourth image subsequent to the melding process being more similar to the pixel information of the first image, than the pixel information of the non-selected regions prior to the melding process.

14. The method of claim 13, wherein blending pixel information of the fourth image with pixel information of the first image comprises:

adjusting the pixel information of the non-selected region of the fourth image so that the average pixel information value of the non-selected region of the fourth image is equal to the average pixel information value of the non-selected region of the first image, or
one or more of:

determining an average pixel information value of the pixel information of the non-selected region of the fourth image and subtracting the average pixel information value from the pixel information of the non-selected region of the first image; and
determining a pixel information gradient of the pixel information of the non-selected region of the fourth image and altering, based on the pixel information gradient, the pixel information of the non-selected region.

15. A non-transient computer-readable storage medium storing instructions which, when executed by a processing device, cause the processing device to perform the method of any one of claims 1 to 14.

100

**Fig. 1A**

120

**Fig. 1B**

130

**Fig. 1C**

140

**Fig. 1D**

Fig. 2A

Fig. 2B

Fig. 2C

Fig. 2D

**Fig. 3A**

**Fig. 3B**

**Fig. 3C**

**Fig. 3D**

Fig. 4A

Fig. 4B

500

```
┌─────────────────────────┐
│   Access an image 510   │
└─────────────────────────┘
             │
             ▼
┌─────────────────────────┐        ┌──────────────────────────────┐
│ Receive a selected area │        │ Crop the received image 517  │
│ of the accessed image,  │───────▶│                              │
│ and a text prompt 515   │        └──────────────────────────────┘
└─────────────────────────┘                      │
                                                 ▼
┌─────────────────────────┐        ┌──────────────────────────────┐
│ Determine an encoding   │◀───────│  Alter working resolution 519│
│ of the prompt 520       │        └──────────────────────────────┘
└─────────────────────────┘
             │
             ▼
┌─────────────────────────┐
│ Transform a region of   │
│ the first image into    │
│ visual noise 525        │
└─────────────────────────┘
             │
             ▼
┌─────────────────────────┐
│ Perform first inpainting│
│ process to generate a   │
│ second image 530        │
└─────────────────────────┘
             │
             ▼
┌─────────────────────────┐
│ Generate a third image  │
│ based on the first and  │
│ second images 535       │
└─────────────────────────┘
             │
             ▼
┌─────────────────────────┐
│ Transform region of the │
│ third image into visual │
│ noise 540               │
└─────────────────────────┘
             │
             ▼
┌─────────────────────────┐        ┌──────────────────────────────┐
│ Perform second          │        │ Insert fourth image into     │
│ inpainting process to   │───────▶│ first image 547              │
│ generate a fourth       │        └──────────────────────────────┘
│ image 545               │
└─────────────────────────┘
```

**Fig. 5**

600

610

620

605

Car

618      617      **Fig. 6A**

630

610

635

605

**Fig. 6B**

640

610

645

605

**Fig. 6C**

650

610

655

605

**Fig. 6D**

**Fig. 7**

Fig. 8A

Fig. 8B

Fig. 8C

Fig. 8D

Fig. 8E

Fig. 8F

Fig. 9A

Fig. 9B

Fig. 9C

Fig. 9D

**EUROPEAN SEARCH REPORT**

Application Number

EP 24 18 5416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OMRI AVRAHAMI ET AL: "Blended Diffusion for Text-driven Editing of Natural Images", ARXIV.ORG, CORNELL UNIVERSITY LIBRARY, 201 OLIN LIBRARY CORNELL UNIVERSITY ITHACA, NY 14853, 29 November 2021 (2021-11-29), XP091105626, * Section 4 * | 1-15 | INV. G06V10/82 G06T5/60 G06T5/77 G06T11/60 G06T5/70 |
| X | WENJING HUANG ET AL: "PFB-Diff: Progressive Feature Blending Diffusion for Text-driven Image Editing", ARXIV.ORG, CORNELL UNIVERSITY LIBRARY, 201 OLIN LIBRARY CORNELL UNIVERSITY ITHACA, NY 14853, 28 June 2023 (2023-06-28), XP091550756, * section 4 * | 1-15 | |
| X | BINXIN YANG ET AL: "Paint by Example: Exemplar-based Image Editing with Diffusion Models", ARXIV.ORG, CORNELL UNIVERSITY LIBRARY, 201 OLIN LIBRARY CORNELL UNIVERSITY ITHACA, NY 14853, 23 November 2022 (2022-11-23), XP091376883, * Section 3 * | 1-15 | TECHNICAL FIELDS SEARCHED (IPC) G06V G06T |

-/--

The present search report has been drawn up for all claims

| Place of search | Date of completion of the search | Examiner |
|---|---|---|
| The Hague | 12 November 2024 | Androulidakis, Iosif |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JAM JIREH ET AL: "A comprehensive review of past and present image inpainting methods", COMPUTER VISION AND IMAGE UNDERSTANDING, ACADEMIC PRESS, US, vol. 203, 18 November 2020 (2020-11-18), XP086441050, ISSN: 1077-3142, DOI: 10.1016/J.CVIU.2020.103147 [retrieved on 2020-11-18] * the whole document * | 1-15 | |
| A | ELHARROUSS OMAR ET AL: "Image Inpainting: A Review", NEURAL PROCESSING LETTERS, KLUWER ACADEMIC PUBLISHERS, NORWELL, MA, US, vol. 51, no. 2, 6 December 2019 (2019-12-06), pages 2007-2028, XP037105326, ISSN: 1370-4621, DOI: 10.1007/S11063-019-10163-0 [retrieved on 2019-12-06] * the whole document * | 1-15 | TECHNICAL FIELDS SEARCHED (IPC) |

The present search report has been drawn up for all claims

| Place of search | Date of completion of the search | Examiner |
|---|---|---|
| The Hague | 12 November 2024 | Androulidakis, Iosif |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)